# EUROPEAN PATENT SPECIFICATION

(11) **EP 2 714 477 B1**
(45) Date of publication and mention of the grant of the patent: **12.08.2015**
(21) Application number: 12735962.8
(22) Date of filing: 30.05.2012
(51) Int. Cl.: B60T 1/06, B60T 10/02, B60T 13/58, B60K 31/00, F16D 57/00, F16H 61/21

(54) **BRAKE DEVICE IN A VEHICLE**
FAHRZEUGBREMSVORRICHTUNG
FREINAGE DANS UN VÉHICULE

(30) Priority: 01.06.2011 SE 1150514
(43) Date of publication of application: 09.04.2014
(73) Proprietor: Scania CV AB, 151 87 Södertälje (SE)
(72) Inventor: NORDKVIST, Johan, S-150 23 Enhörna (SE)
(74) Representative: Scania CV AB
(86) International application number: PCT/SE2012/050574
(87) International publication number: WO 2012/166042

(56) References cited:
- DE-A1- 4 446 288
- DE-A1-102010 051 715
- DE-B3- 10 343 975

## Description

### BACKGROUND TO THE INVENTION AND PRIOR ART

The invention relates to a brake device in a vehicle according to the preamble of claim 1.

Hydraulic retarders and electric retarders are often used as supplementary brakes in heavy vehicles, making it possible to reduce the load on and wear of the wheel brakes. A retarder connected to a component which is situated before the gearbox in a vehicle's power train is called a primary retarder and a retarder connected to a component which is situated after the gearbox in the power train is called a secondary retarder. Hydraulic retarders comprise a rotatable component in the form of a pump wheel and electric retarders comprise a rotatable component in the form of a rotor. Hydraulic and electric retarders exert a braking effect which is related to the speed of the rotatable component. This means that it is advantageous to use primary retarders for braking at low vehicle speeds and secondary retarders at higher speeds.

DE 100 53 084 refers to a brake device for a tracked vehicle. The device comprises two disc clutches by means of which a hydraulic retarder can alternatively be connected to an input shaft or an output shaft of a gearbox. This means that the retarder can alternately serve as primary retarder and secondary retarder. It can therefore with advantage be used for braking at both high and low vehicle speeds. In this case the gearbox is situated at a location substantially between the vehicle's powered wheels. Its input shaft and output shaft have here a parallel extent in the vehicle's transverse direction. In such a power train where the gearbox input shaft and output shaft are at a short distance from one another it is relatively easy to connect a retarder to the respective shafts. DE4446288 A1 describes a transmission with both a primary and a secondary retarder.

Most motor vehicles, however, particularly those with rear wheel drive, have a power train in which the gearbox input shaft and output shaft have an extent on opposite sides of the gearbox in the vehicle's longitudinal direction. The two shafts are here at a relatively great distance from one another. Connecting a retarder alternately to two shafts situated on opposite sides of a gearbox requires a relatively complicated connecting mechanism.

### SUMMARY OF THE INVENTION

The object of the present invention is to propose a retarder which can alternately serve as primary retarder and secondary retarder by means of relatively simple connecting mechanisms even in cases where the gearbox input shaft and output shaft are at a relatively great distance from one another.

This object is achieved with the brake device of the kind mentioned in the introduction which is characterised by the features indicated in the characterising part of claim 1. Retarders have a braking action which is related to rotation speed. When the vehicle is travelling at high speed, the retarder is connected to the gearbox output shaft, which rotates fast enough to enable the retarder to impart a good braking action. When the vehicle is travelling at low speed, the retarder is connected instead to a component in the gearbox which rotates faster than the output shaft. The retarder may therefore also be used for braking at low vehicle speeds. In this latter case the retarder is connected to a component in the gearbox which is itself connected movably to both the input shaft and the output shaft. The component is with advantage connected to the input shaft in such a way as to rotate at substantially the same speed as the input shaft. As the component is also connected movably to the gearbox output shaft, the retarder's braking action on said component is conveyed to the output shaft and the vehicle's power train. Certain components which rotate at high speed in the gearbox have at least a portion situated close to the output shaft. This means that the retarder can be connected to a portion of said component which is at a relatively short distance from the output shaft. The connecting mechanisms which connect retarders to the gearbox output shaft and said component may consequently be quite simple and occupy little space.

According to a preferred embodiment of the present invention, the gearbox comprises a power take-off (PTO) and said component is a rotatable shaft of the PTO. Gearboxes of heavy vehicles are often provided with a PTO. It usually comprises a shaft which at one end is driven by the gearbox input shaft. At an opposite end, the PTO shaft is connected to a PTO connection on an opposite side of the gearbox close to the gearbox output shaft. The PTO shaft is thus here situated close to the output shaft, making it possible to connect the retarder to both the gearbox output shaft and the PTO shaft by means of relatively simple connecting mechanisms which occupy little space.

According to another preferred embodiment of the present invention, said component is a countershaft in the gearbox. Mechanical gearboxes usually have a countershaft driven by the input shaft. The countershaft may rotate at the same speed as or a somewhat lower speed than the input shaft, but will in substantially every gear of the gearbox rotate faster than the output shaft. One end of the countershaft is usually situated not far away from the output shaft, making it possible to connect the retarder to both the output shaft and the countershaft by means of relatively simple connecting mechanisms which occupy little space.

According to another preferred embodiment of the present invention, the second connecting mechanism comprises a synchronising clutch by which the retarder is connectable to said component in the gearbox. To achieve a connection for joint rotation between the retarder and said component, they have first to be brought to a synchronous speed. Such synchronisation and connecting together are with advantage effected by means of a synchronising clutch. At times when the retarder is intended to brake the vehicle at low speeds, the synchronising clutch may synchronise and connect for joint rotation with the PTO shaft a gearwheel driven by the retarder. Alternatively, the synchronising clutch may synchronise and connect for joint rotation with the countershaft in the gearbox a shaft driven by the retarder.

According to another preferred embodiment of the present invention, the brake device comprises a control unit adapted to receiving information when the retarder is to be activated and information for deciding whether the retarder should be connected to the gearbox output shaft or to said component in the gearbox. The control unit may in this case receive information from a sensor or the like which monitors the position of a brake control which a driver uses to initiate activation of the retarder. The control unit may be adapted to receiving information about a parameter related to the speed of the output shaft and to using this information to decide whether the retarder should be connected to the gearbox output shaft or to said component in the gearbox. Vehicle speed is an example of a parameter related to the speed of the gearbox output shaft. The control unit can therefore decide whether the output shaft is rotating fast enough to enable the retarder to achieve good braking of the vehicle. If the output shaft is rotating faster than, for example, a limit value, the control unit connects the retarder to it. If the output shaft is rotating at a speed below the limit value, the control unit connects the retarder to said component in the gearbox. Alternatively the control unit may be adapted to receiving information about gears currently engaged in the gearbox and to using this information to decide whether the retarder should be connected to the gearbox output shaft or to said component in the gearbox. If the driver has engaged a low gear in the gearbox, this is an indication that the vehicle is moving at a low speed. The lower the gear engaged in the gearbox, the higher the ratio between the respective speeds of said component and the gearbox output shaft. It is therefore often appropriate to connect the retarder to said component when a low gear is engaged in the gearbox.

According to another preferred embodiment of the present invention, the gearbox comprises a range gear adapted to giving gears engaged in the gearbox a high ratio or a low ratio. A range gear is a planetary gear situated after the ordinary gearchange mechanism in a gearbox. Providing a gearbox with a range gear is a simple way of doubling the number of gears. In this case the control unit may for example connect the retarder to the gearbox output shaft when the range gear provides the gear engaged in the gearbox with a high ratio and to said component in the gearbox when the range gear provides the gear engaged in the gearbox with a low ratio.

According to a preferred embodiment of the present invention, the gearbox input shaft and output shaft have an extent in the vehicle's longitudinal direction. Heavy vehicles usually have their engine and gearbox in a forward portion of the vehicle and their powered wheels in a rear portion of the vehicle. In this case the power train has a main extent in the vehicle's longitudinal direction. The gearbox input shaft and output shaft have here an extent in the vehicle's longitudinal direction on both sides of the gearbox. They are therefore at a relatively long distance from one another. It is particularly in such vehicles that it is appropriate to connect the retarder to a component in the gearbox instead of to the gearbox input shaft at times of low vehicle speed.

According to a preferred embodiment of the invention, the retarder is a hydraulic retarder or an electric retarder. Both kinds of retarder require a relatively high rotation speed to enable them to provide a good braking action. It is therefore appropriate to connect hydraulic and electric retarders to components which rotate faster than the gearbox output shaft at times of low vehicle speed.

### BRIEF DESCRIPTION OF THE DRAWINGS

Preferred embodiments of the invention are described below by way of examples with reference to the attached drawings, in which
- Fig. 1: depicts a brake device according to a first embodiment of the invention and
- Fig. 2: depicts a brake device according to a second embodiment of the invention.

### DETAILED DESCRIPTION OF PREFERRED EMBODIMENTS OF THE INVENTION

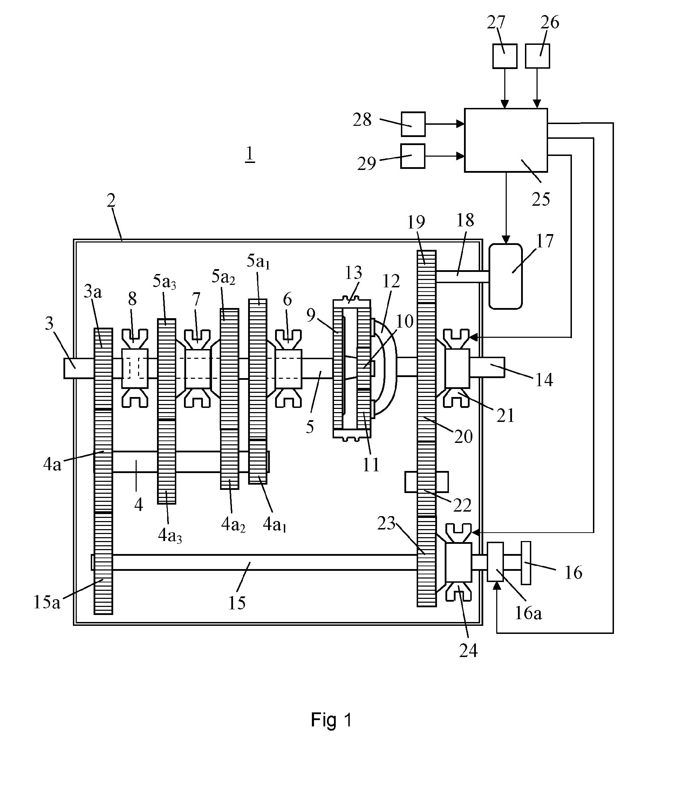

Fig. 1 depicts part of a vehicle 1 provided with a power train for conveying tractive motion from an undepicted engine to at least one pair of likewise undepicted powered wheels of the vehicle. The power train comprises a gearbox 2 and an input shaft 3 to the gearbox. The gearbox input shaft 3 is provided with a gearwheel 3a inside the gearbox. The gearwheel 3a on the input shaft 3 is in engagement with a gearwheel 4a on a countershaft 4 in the gearbox. The countershaft is provided in this embodiment with three further gearwheels 4a₁, 4a₂, 4a₃ in engagement with respective gearwheels 5a₁, 5a₂, 5a₃ on a mainshaft 5 in the gearbox. A first synchronising clutch 6 can be used to establish a connection, for joint rotation, between the gearwheel 5a₁ and the mainshaft 5. When this connection for joint rotation is established between the countershaft 4 and the mainshaft 5 the result is a gear ratio defined by the relationship between the respective numbers of teeth on the gearwheels 4a₁, 5a₁. This ratio represents the first gear in the gearbox 2. A second synchronising clutch 7 can be used to establish a connection, for joint rotation, between the gearwheel 5a₂ and the mainshaft 5. When this connection for joint rotation is established, the result is a gear ratio defined by the relationship between the numbers of teeth on the gearwheels 4a₂, 5a₂. This ratio represents the second gear in the gearbox 2. The second synchronising clutch 7 can also be used to establish a connection, for joint rotation, between the gearwheel 5a₃ and the mainshaft 5. When this connection for joint rotation is established, the result is a gear ratio defined by the relationship between the numbers of teeth on the gearwheels 4a₃, 5a₃. This ratio represents the third gear in the gearbox 2. Finally, a third synchronising clutch 8 can be used to establish a connection, for joint rotation, between the input shaft 3 and the mainshaft 5, thus converting the speed of the input shaft to a similar speed of the mainshaft 5. This gear ratio represents the fourth gear in the gearbox 2.

The gearbox 2 is provided with a range gear in the form of a planetary gear. This means that the mainshaft 5 is provided with a clutch cone 9, which has external teeth, and a sunwheel 10. The sunwheel has external teeth in engagement with a number of toothed planet wheels 11. The planet wheels are journalled in a planet wheel carrier 12. An undepicted second clutch cone provided with external teeth is fastened stationarily in a wall portion in the gearbox. A ring gear 13 with internal teeth is arranged for movement in an axial direction by means of a power device which may be a compressed air cylinder. The planet wheel holder 12 is fastened on a gearbox output shaft 14. The gearbox input shaft 3 and output shaft 14 are situated on opposite sides of the gearbox and have an extent in the vehicle's longitudinal direction.

A driver driving the vehicle 1 may indicate a desired high or low ratio for the four ordinary gears in the gearbox 2 by moving an operating means which may be fastened round a gear lever. When he/she moves the operating means to a first position, the ring gear 13 moves to a high-ratio position. Fig. 1 shows the ring gear in the high-ratio position in which it connects the clutch cone 9 to the planet wheels 11. In this situation the speed of the mainshaft 5 is conveyed unchanged to the gearbox output shaft 14. When the driver moves the operating means to a second position, the ring gear 13 moves to a low-ratio position in which it connects the planet wheels to the undepicted stationary second clutch cone so that the ring gear is prevented from rotating. In this situation the speed of the mainshaft 5 is conveyed to the gearbox output shaft 14 via the sunwheel 10, the planet wheels 11 and the planet wheel carrier 12. The gearbox output shaft 14 thus runs at a lower speed than the mainshaft 5. To sum up, it may be noted that when the fourth gear is in the high-ratio state the speed of the gearbox input shaft 3 is converted to a similar speed of the output shaft 14. In other gears the speed of the output shaft 14 will be lower than that of the input shaft 3. The lower the gear engaged in the gearbox, the greater will be the difference between the speed of the input shaft and that of the gearbox output shaft.

The gearbox 2 is in this case provided with a power take-off (PTO). The PTO has a shaft 15 which at one end is provided with a gearwheel 15a in engagement with the gearwheel 4a on the countershaft 4. The PTO shaft 15 is thus connected movably to both the countershaft 4 and the gearbox input shaft 3. The gearwheel 15a has in this case the same number of teeth as the gearwheel 3a and therefore rotates at the same speed as the gearbox input shaft irrespective of the number of teeth on the intermediate gearwheel 4a. The PTO shaft 15 therefore runs at a higher speed than the gearbox output shaft 14 in every gear position except when the fourth gear is in a range gear high-ratio state. The PTO shaft 15 has at an opposite end from the gearwheel 15a a schematically depicted clutch plate 16 to connect, for example, a hydraulic pump. The PTO shaft is connected to the clutch plate by means of the clutch unit 16a. The control unit 25 causes a clutch unit 16a to disconnect the clutch plate 16 when the vehicle is in operation.

The vehicle 1 is equipped with a supplementary brake in the form of a schematically depicted retarder 17. The retarder may be a hydraulic retarder or an electric retarder.

The retarder has a rotatable component which in a hydraulic retarder is a pump wheel and in an electric retarder a rotor. The rotatable component is connected to a shaft 18 and a gearwheel 19. The gearwheel 19 is connected to a gearwheel 20 which is mounted on the gearbox output shaft 14. A synchronising clutch 21 can be used to establish a connection, for joint rotation, between the gearwheel 20 and the gearbox output shaft 14. The gearwheel 20 is in engagement via an intermediate gearwheel 22 with a gearwheel 23 mounted on the PTO shaft 15. A synchronising clutch 24 can be used to establish a connection, for joint rotation, between the gearwheel 23 and the PTO shaft 15. The gearwheel 20 and the gearwheel 23 are in a common plane which has an extent at right angles to the gearbox output shaft 14 and the PTO shaft 15.

A control unit 25 is adapted to controlling the activation of the synchronising clutches 21, 24. The control unit substantially continuously receives information from a sensor 26 which monitors the position of, for example, a brake control by means of which a driver initiates activation of the retarder 17. The control unit also receives information from a sensor 27 or the like about gears engaged in the gearbox 2. The control unit also receives in this case information from a sensor 28 which detects the speed, or a parameter related to the speed, of the gearbox output shaft 14, e.g. the vehicle's speed. The control unit may also receive information from a sensor 29 which monitors the speed of the gearbox input shaft 3, which thus corresponds to that of the PTO shaft 15 and that of the engine.

During operation of the vehicle, the control unit 25 receives information from the sensor 26 which indicates when the retarder 17 is to be activated. Before this takes place, the control unit assesses whether the retarder should be connected to the gearbox output shaft 14 or to the PTO shaft 15. It may base this assessment on the speed of the gearbox output shaft. If the output shaft is rotating faster than an appropriate limit value, the retarder will be connected to it. If the output shaft is rotating at a speed below said limit value, the retarder will be connected to the PTO shaft. Alternatively, the control unit may base this assessment on gears engaged in the gearbox. The gearbox will normally be at a lower gear ratio when the ordinary gears are in a range gear low-ratio state than when they are in a high-ratio state. The control unit may here connect the retarder 17 to the output shaft 14 when the gears are at a range gear high ratio and to the PTO shaft 15 when the gears are at a range gear low ratio. The control unit may of course base this assessment on other parameters such as the speed of the PTO shaft or combinations of the parameters mentioned above.

When the retarder 17 is to be connected to the gearbox output shaft 14, the control unit 25 will activate the synchronising clutch 21 so that the speeds of the gearwheel 20 and the output shaft 14 are synchronised, which is followed by the establishment of a connection, for joint rotation, between the gearwheel 20 and the output shaft. The retarder's rotatable component, which in the case of a hydraulic retarder is a pump wheel and in that of an electric retarder a rotor, will thus be driven by the gearbox output shaft. The control unit then activates the retarder so that the pump wheel or the rotor imparts a braking action. This braking action is propagated from the retarder, via a connecting mechanism in the form of the shaft 18, the gearwheels 19, 20 and the synchronising clutch 21, to the gearbox output shaft 14 to become a braking action on the vehicle's power train. When the retarder is to be connected to the PTO shaft 15, the control unit will activate the synchronising clutch 24 so that the speeds of the gearwheel 23 and the PTO shaft are synchronised, which is followed by establishment of a connection, for joint rotation, between the gearwheel 23 and the PTO shaft. The control unit then activates the retarder to exert a braking action on the PTO shaft via a connecting mechanism in the form of the shaft 18, the gearwheels 19, 20, 22, 23 and the synchronising clutch 24. The retarder's braking action is conveyed from the PTO shaft to become a braking action on the vehicle's power train, via the gearwheels 15a, 4a, the countershaft 4, either of the gearwheel pairs 4a₁₋₃, 5a₁₋₃, the mainshaft 5 and the range gear.

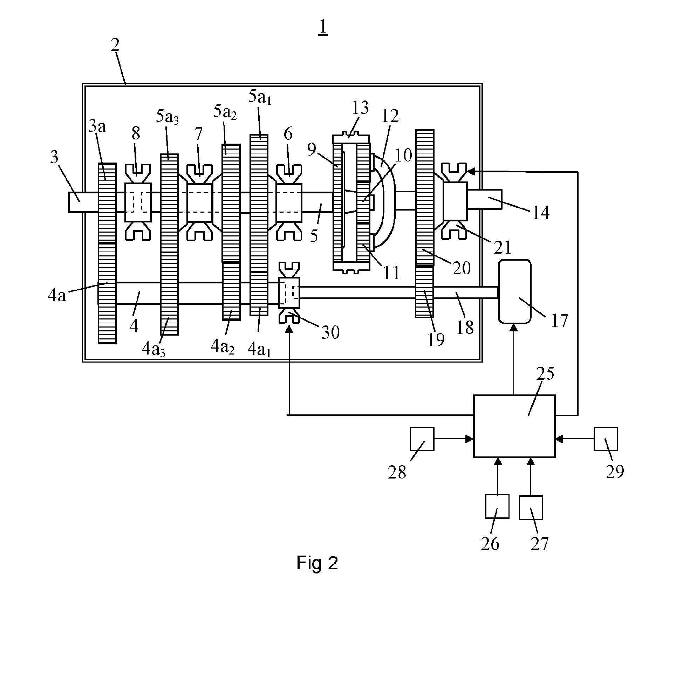

Fig. 2 depicts an alternative embodiment in which the gearbox 2 is identical with that in Fig. 1 except that it is not provided with a PTO. A retarder 17 is in this case connectable to the gearbox output shaft 14 or to the countershaft 4 which is driven by the gearbox input shaft 3. The countershaft gearwheel 4a has in this case somewhat more teeth than the input shaft gearwheel 3a. The countershaft therefore rotates at a somewhat lower speed than the input shaft 3, but faster than the output shaft 14 in every gear except the fourth gear when it is in a range gear high-ratio state. It is therefore appropriate to connect the retarder 17 to the countershaft 4 at times when the vehicle is travelling at low speed and a low gear is engaged in the gearbox. Here again, the retarder is connectable to the gearbox output shaft via a shaft 18 which has a gearwheel 19 in engagement with a gearwheel 20 mounted on the gearbox output shaft 14. A synchronising clutch 21 can be used to put the gearwheel 20 into engagement, for joint rotation, with the output shaft 14. The shaft 18 is in this case arranged coaxially relative to the countershaft 4 and extends into the gearbox as far as the countershaft. A synchronising clutch 30 may be used to connect the shaft 18 to the countershaft 4.

During operation of the vehicle, the control unit 25 substantially continuously receives information from the sensor 26 about prospective activation of the retarder 17. When it receives information which indicates that the retarder is to be activated, it initially makes an assessment of whether the retarder should be connected to the gearbox output shaft 14 or to the countershaft 4. To make this assessment, the control unit weighs up information from one or more of the sensors 27, 28, 29 defined in the embodiment in Fig. 1. Where the control unit finds that the retarder should be connected to the gearbox output shaft 14, it activates the synchronising clutch 21 to fasten the gearwheel 20 to, for joint rotation with, the gearbox output shaft. Where the control unit finds that the retarder should be connected to the countershaft 4, it activates the synchronising clutch 30 so that the shaft 18 is connected to the countershaft. In this situation the retarder is connected to the gearbox output shaft via the countershaft 4, either of the gearwheel pairs 4a₁₋₃, 5a₁₋₃, the mainshaft 5 and the range gear. The control unit then activates the retarder 17 so that, via the countershaft, it brakes the gearbox output shaft 14 and hence the vehicle's power train.

The invention is in no way restricted to the embodiment described but may be varied freely within the scopes of the claims. It is not confined to the type of gearbox referred to in the embodiments but may be employed on most types of gearboxes.

## Claims

1. A brake device in a vehicle (1) provided with a power train with a gearbox (2), an input shaft (3) to the gearbox and an output shaft (14) from the gearbox, which device comprises a retarder (17), a first connecting mechanism (18-21) by which the retarder (17) is connectable to the gearbox output shaft (14), a second connecting mechanism (18-24, 30) by which the retarder (17) is connectable to a component (4, 15) in the gearbox which is directly or indirectly connected movably to the gearbox input shaft (3) and the gearbox output shaft, which component (4, 15) rotates faster than the gearbox output shaft (14) at times when at least one lowest gear is engaged in the gearbox (2), **characterised in that** the retarder (17) comprises a rotatable component connected either to the gearbox output shaft (14) via the first connecting mechanism (18-21) or to said component (4, 15) which is connected to the gearbox input shaft (3) via the second connecting mechanism (18-24) when the retarder is activated.

2. A brake device according to claim 1, **characterised in that** the gearbox (2) comprises a power take-off and that said component is a rotatable shaft (15) of the power take-off.

3. A brake device according to claim 1, **characterised in that** said component is a countershaft (4) in the gearbox.

4. A brake device according to any one of the foregoing claims, **characterised in that** the second connecting mechanism comprises a synchronising clutch (24, 30) by which the retarder (17) is connectable to said component (4, 15) in the gearbox.

5. A brake device according to any one of the foregoing claims, **characterised in that** it comprises a control unit (25) adapted to receiving information (26) when the retarder (17) is to be activated and information (27, 28, 29) for deciding whether the retarder (17) should be connected to the gearbox output shaft (14) or to said component (4, 15) in the gearbox.

6. A brake device according to claim 5, **characterised in that** the control unit (25) is adapted to receiving information (29, 30) about a parameter related to the speed of the output shaft (14) and to using this information to decide whether the retarder (17) should be connected to the gearbox output shaft (14) or to said component (4, 15) in the gearbox.

7. A brake device according to claim 5 or 6, **characterised in that** the control unit (25) is adapted to receiving information (28) about gears engaged in the gearbox and to using this information to decide whether the retarder (17) should be connected to the gearbox output shaft (14) or to said component (4, 15) in the gearbox.

8. A brake device according to any one of the foregoing claims, **characterised in that** the gearbox (2) comprises a range gear (9-13) adapted to giving gears engaged in the gearbox (2) a high ratio or a low ratio.

9. A brake device according to any one of the foregoing claims, **characterised in that** the gearbox input shaft (3) and the gearbox output shaft (14) have an extent in the vehicle's longitudinal direction.

10. A brake device according to any one of the foregoing claims, **characterised in that** the retarder (17) is a hydraulic retarder or an electric retarder.

## Patentansprüche

1. Bremsvorrichtung in einem Fahrzeug (1), das mit einem Antriebsstrang mit einem Getriebe (2) ausgestattet ist, einer Eingangswelle (3) zu dem Getriebe und einer Ausgangswelle (14) von dem Getriebe, wobei die Vorrichtung einen Retarder (17) umfasst, einen ersten Verbindungsmechanismus (18-21), mittels dem der Retarder (17) mit der Getriebeausgangswelle (14) verbindbar ist, einen zweiten Verbindungsmechanismus (18-24, 30), mittels dem der Retarder (17) mit einer Komponente (4, 15) in dem Getriebe verbindbar ist, die direkt oder indirekt mit der Getriebeeingangswelle (3) und der Getriebeausgangswelle beweglich verbunden ist, wobei die Komponente (4, 15) zu Zeitpunkten, in denen wenigstens ein kleinster Gang in den Getriebe (2) eingelegt ist, schneller als die Getriebeausgangswelle (14) rotiert,
**dadurch gekennzeichnet, dass** der Retarder (17) eine rotierbare Komponente umfasst, die entweder mit der Getriebeausgangswelle (14) über den ersten Verbindungsmechanismus (18-21) verbunden ist oder mit der Komponente (4, 15), die mit der Getriebeeingangswelle (3) mittels des zweiten Verbindungsmechanismus (18-24) verbunden ist, wenn der Retarder aktiviert ist.

2. Bremsvorrichtung gemäß Anspruch 1,
**dadurch gekennzeichnet, dass** das Getriebe (2) einen Nebenabtrieb umfasst und dass die Komponente eine rotierbare Welle (15) des Nebenabtriebs ist.

3. Bremsvorrichtung gemäß Anspruch 1,
**dadurch gekennzeichnet, dass** die Komponente eine Vorgelegewelle (4) in dem Getriebe ist.

4. Bremsvorrichtung gemäß einem der vorangehenden Ansprüche,
**dadurch gekennzeichnet, dass** der zweite Verbindungsmechanismus eine Synchronisierkupplung (24, 30) umfasst, mittels der der Retarder (17) mit der Komponente (4, 15) in dem Getriebe verbindbar ist.

5. Bremsvorrichtung gemäß einem der vorangehenden Ansprüche,
**dadurch gekennzeichnet, dass** sie eine Steuereinheit (25) umfasst, die dazu eingerichtet ist, Informationen (26) zu erhalten, wann der Retarder (17) aktiviert werden soll, und Informationen (27, 28, 29), um zu entscheiden, ob der Retarder (17) mit der Getriebeausgangswelle (14) oder mit der Komponente (4, 15) in dem Getriebe verbunden werden soll.

6. Bremsvorrichtung gemäß Anspruch 5,
**dadurch gekennzeichnet, dass** die Steuereinheit (25) dazu eingerichtet ist, I n-formationen (29, 30) bezüglich eines Parameters zu erhalten, der in Bezug zu der Geschwindigkeit der Ausgangswelle (14) steht, und diese Informationen zu verwenden, um zu entscheiden, ob der Retarder (17) mit der Getriebeausgangswelle (14) oder mit Komponente (4, 15) in dem Getriebe verbunden werden soll.

7. Bremsvorrichtung gemäß Anspruch 5 oder 6,
**dadurch gekennzeichnet, dass** die Steuereinheit (25) dazu eingerichtet ist, I n-formationen (28) bezüglich eingelegter Gänge in dem Getriebe zu erhalten, und diese Informationen zu verwenden, um zu entscheiden, ob der Retarder (17) mit der Getriebeausgangswelle (14) oder der Komponente (4, 15) in dem Getriebe verbunden werden soll.

8. Bremsvorrichtung gemäß einem der vorangehenden Ansprüche,
**dadurch gekennzeichnet, dass** das Getriebe (2) ein Bereichsgetriebe (9-13) umfasst, das dazu eingerichtet ist, den in dem Getriebe (2) eingelegten Gängen eine hohe Übersetzung oder eine niedrige Übersetzung zu verleihen.

9. Bremsvorrichtung gemäß einem der vorangehenden Ansprüche,
**dadurch gekennzeichnet, dass** die Getriebeeingangswelle (3) und die Getriebeausgangswelle (14) eine Erstreckung in Längsrichtung des Fahrzeugs aufweisen.

10. Bremsvorrichtung gemäß einem der vorangehenden Ansprüche,
**dadurch gekennzeichnet, dass** der Retarder (17) ein hydraulischer Retarder oder ein elektrischer Retarder ist.

## Revendications

1. Dispositif de freinage inclus dans un véhicule (1) comprenant une chaîne cinématique qui comporte une boîte de vitesses (2), un arbre d'entrée (3) attaquant la boîte de vitesses et un arbre de sortie (14) partant de la boîte de vitesses, lequel dispositif comprend un ralentisseur (17), un premier mécanisme de liaison (18-21) par lequel le ralentisseur (17) peut être relié à l'arbre de sortie (14) de la boîte de vitesses, un second mécanisme de liaison (18-24, 30) par lequel le ralentisseur (17) peut être relié à un élément (4, 15) de la boîte de vitesses qui est directement ou indirectement relié cinématiquement à l'arbre d'entrée (3) de la boîte de vitesses et à l'arbre de sortie de la boîte de vitesses, lequel élément (4, 15) tourne plus vite que l'arbre de sortie (14) de la boîte de vitesses dans les cas où une au moins très petite vitesse est engagée dans la boîte de vitesses (2), **caractérisé en ce que** le ralentisseur (17) comprend un élément rotatif qui est relié, soit à l'arbre de sortie (14) de la boîte de vitesses par l'intermédiaire du premier mécanisme de liaison (18-21), soit audit élément (4, 15) qui est relié à l'arbre d'entrée (3) de la boîte de vitesses par l'intermédiaire du second mécanisme de liaison (18-24) lorsque le ralentisseur est activé.

2. Dispositif de freinage selon la revendication 1, **caractérisé en ce que** ladite boîte de vitesses (2) comprend une prise de mouvement et que ledit élément est un arbre rotatif (15) de la prise de mouvement.

3. Dispositif de freinage selon la revendication 1, **caractérisé en ce que** ledit élément est un arbre secondaire (4) de la boîte de vitesses.

4. Dispositif de freinage selon une quelconque des revendications précédentes, **caractérisé en ce que** le second mécanisme de liaison comprend un synchroniseur (24, 30) par lequel le ralentisseur (17) peut être relié audit élément (4, 15) de la boîte de vitesses.

5. Dispositif de freinage selon une quelconque des revendications précédentes, **caractérisé en ce qu'**il comprend une unité de commande (25) apte à recevoir de l'information (26) lorsque le ralentisseur (17) doit être activé et de l'information (27, 28, 29) permettant de décider si le ralentisseur (17) doit être relié à l'arbre de sortie (14) de la boîte de vitesses ou audit élément (4, 15) de la boîte de vitesses.

6. Dispositif de freinage selon la revendication 5, **caractérisé en ce que** ladite unité de commande (25) est apte à recevoir de l'information (29, 30) relative à un paramètre lié à la vitesse de l'arbre de sortie (14) et à utiliser cette information pour décider si le ralentisseur (17) doit être relié à l'arbre de sortie (14) de la boîte de vitesses ou audit élément (4, 15) de la boîte de vitesses.

7. Dispositif de freinage selon la revendication 5 ou 6, **caractérisé en ce que** l'unité de commande (25) est apte à recevoir de l'information (28) relative aux vitesses engagées dans la boîte de vitesses et à utiliser cette information pour décider si le ralentisseur (17) doit être relié à l'arbre de sortie (14) de la boîte de vitesses ou audit élément (4, 15) de la boîte de vitesses.

8. Dispositif de freinage selon une quelconque des revendications précédentes, **caractérisé en ce que** la boîte de vitesses (2) comprend un doubleur de gamme (9-13) apte à donner aux vitesses engagées dans la boîte de vitesses (2) un grand rapport ou un petit rapport.

9. Dispositif de freinage selon une quelconque des revendications précédentes, **caractérisé en ce que** l'arbre d'entrée (3) de la boîte de vitesses et l'arbre de sortie (14) de la boîte de vitesses ont une extension dans la direction longitudinale du véhicule.

10. Dispositif de freinage selon une quelconque des revendications précédentes, **caractérisé en ce que** le ralentisseur (17) est un ralentisseur hydraulique ou un ralentisseur électrique.
